# EUROPEAN PATENT APPLICATION

(11) **EP 1 887 138 A2**
(43) Date of publication of application: **13.02.2008**
(21) Application number: 05747363.9
(22) Date of filing: 04.05.2005
(51) Int. Cl.: E01C 19/20

(54) **MACHINE FOR SPREADING MATERIALS ON THE GROUND**

(71) Applicant: Bombform, S.L., 17190 Salt (ES)
(72) Inventor: PONT FEIXES, Conrado, E-17190 Salt (ES)
(74) Representative: Intes, Didier Gérard André
(86) International application number: PCT/ES2005/000239
(87) International publication number: WO 2006/117415

(57) **Abstract**

The invention relates to a machine for spreading materials on the floor, formed by a structural assembly arranged on three independent wheel assemblies (2, 3, 4) which can be selectively and individually connected to a hydraulic drive system, the structural assembly having a head (10) for distributing and leveling the application materials, which head is arranged with the possibility of moving towards the sides with respect to the assembly position at the front of the machine.

## Description

### Field of the Art

The present invention relates to floor conditioning by means of applying flooring materials on such floors, providing a machine with reduced size and weight working in a self-propelled manner, whereby an effective operation can be carried out in small-sized places.

### State of the Art

The application of materials, such as sand, concrete, etc. in flooring is carried out by spreading said materials manually, or using machines that are especially designed and prepared for said function.

In said function, as in any other function, the use of machines involves time and labor savings, which entails an economic advantage in the production cost.

To that end, there are large-sized automotive machines, which can only operate in spaces with a large area, but which are not suitable for reduced spaces, such as basement floors, decks and construction platforms, etc.

Small-sized machines whereby the operation can be carried out in spaces with a small area are also known, but this type of conventional machines are manually handled and therefore their use requires an operator job that is expensive and also slow.

### Object of the Invention

According to the invention, a machine which operates in a self-propelled manner and which is formed according to a structural embodiment with reduced size and weight, being suitable for working in places with little space in very advantageous operating conditions,is proposed.

This machine object of the invention consists of a frame incorporated on three roller assemblies provided with respective actuation drive units, one of said roller assemblies being able to be actuated in orientation so as to steer the machine, whereas a leveling head is incorporated at the end of the frame, which head is supported by means of active height-adjustment supports, the functional assembly being linked to a control equipment which can be commanded from a control post arranged on the machine itself, or by means of distant control with a remote control.

The motorization of the roller assemblies is hydraulic, each assembly having a hydraulic motor incorporated on the assembly itself, whereas the structural frame of the machine is formed as a container for the hydraulic system.

The roller assemblies are incorporated by means of a swiveling fastening, allowing the adaptation to the irregularities of the movement surface, without this affecting the result of the work of the machine.

Said roller assemblies further have, individually, respective clutch locks, whereby each of the assemblies can be coupled and uncoupled with respect to the drive actuation, thus allowing the machine to be adapted to work with traction in one, two or the three roller assemblies, as appropriate depending on the application.

The hydraulic drive system of the roller assemblies also has respective switches, whereby each assembly can be individually connected or disconnected with respect to the hydraulic drive system on the roller assemblies depending on the desired force and speed conditions of the machine.

Each roller assembly is further arranged with a swiveling assembly, thus being able to adopt a certain inclination to adapt to the conditions of the support surface on which the machine operates.

The leveling head is arranged linked to the structural frame of the machine by means of a fastening which allows the movement of said head towards the sides by means of an actuating cylinder, the position of the head thus being able to be adapted for the access of the working action with the machine to all the places.

The leveling head is supported by means of vertical hydraulic cylinders, whereby the height position of said head is set according to the leveling to be carried out, by having an automatic adjustment of said position by means of laser detectors arranged at the lower part of the head and receivers of the signals from said detectors arranged in the supporting cylinders, such that the joining between the supporting cylinders and the head is formed by means of anti-vibration shock absorbers for the effectiveness of this control, which shock absorbers prevent the machine vibrations from being transmitted to the laser detectors at the lower part of the head.

The fastening between the supporting cylinders of the head and the shock absorbers is formed by means of a simple joining with pins, allowing the head to be easily disassembled for transport.

A hopper for supplying material can be incorporated on the structural frame of the machine, which hopper is connected by means of a worm screw conveyor to an unloader on the head, so as to deposit through such head the flooring material on the application surface on which the machine operates.

Due to the above, said machine object of the invention certainly has very advantageous features, acquiring its own identity and a preferred character for the function for which it is intended.

### Description of the Drawings

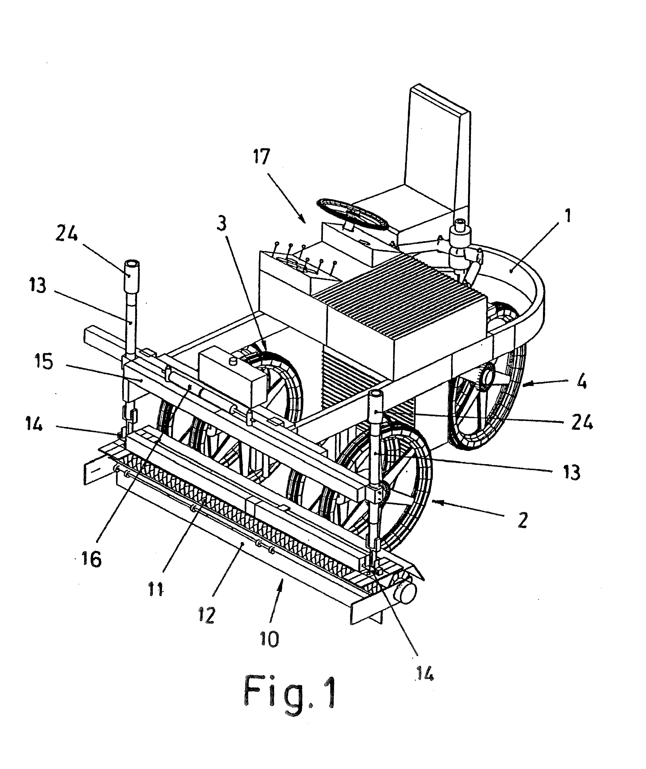

Figure 1 shows a front perspective view of the machine object of the invention.

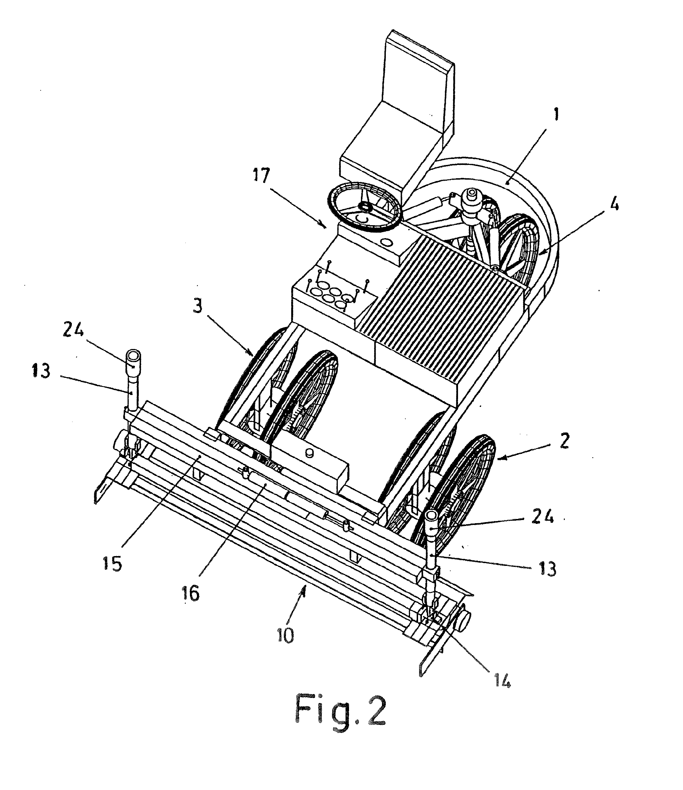

Figure 2 shows a perspective view of the machine from a higher observation.
Figure 3 shows a detail of the swiveling assembly arrangement of a roller assembly of the machine, with the wheels in a vertical position.
Figure 4 shows a detail like the previous one, with the wheels in an inclined position.
Figure 5 shows a front view of the machine with the roller assemblies in an inclined position.
Figures 6 and 7 show a detail of the clutch lock of a roller assembly, in the free position and in the locked position, respectively.
Figure 8 shows a diagram of the hydraulic drive actuation system of the roller assemblies of the machine.
Figure 9 shows a detail of the fastening between a supporting cylinder and the leveling head of the machine.
Figure 10 shows a perspective view of the disassembly of the leveling head with respect to the coupling in the machine.
Figure 11 shows a perspective view of the machine of the invention provided with equipment for supplying materials.

### Detailed Description of the Invention

The object of the machine relates to a machine intended to spread flooring materials, with an embodiment which allows operating in advantageous conditions in places with reduced space.

The proposed invention consists of a structural frame (1) arranged on a support of three roller assemblies (2, 3, 4), two of the roller assemblies (2, 3) having a fixed orientation, whereas the third roller assembly (4) can be orientated in a variable manner to steer the machine.

This results in a machine assembly which can operate in very little space, the roller assemblies (2, 3, 4) being formed by respective pairs of wheels arranged in tandem, such that the three assemblies together determine a machine weight load distribution which allows operating on relatively soft surfaces such as soil, sand, green concrete, etc, insofar as said roller assemblies (2, 3, 4) are individually arranged in a swiveling assembly, allowing the adaptation to the conditions of the support surface.

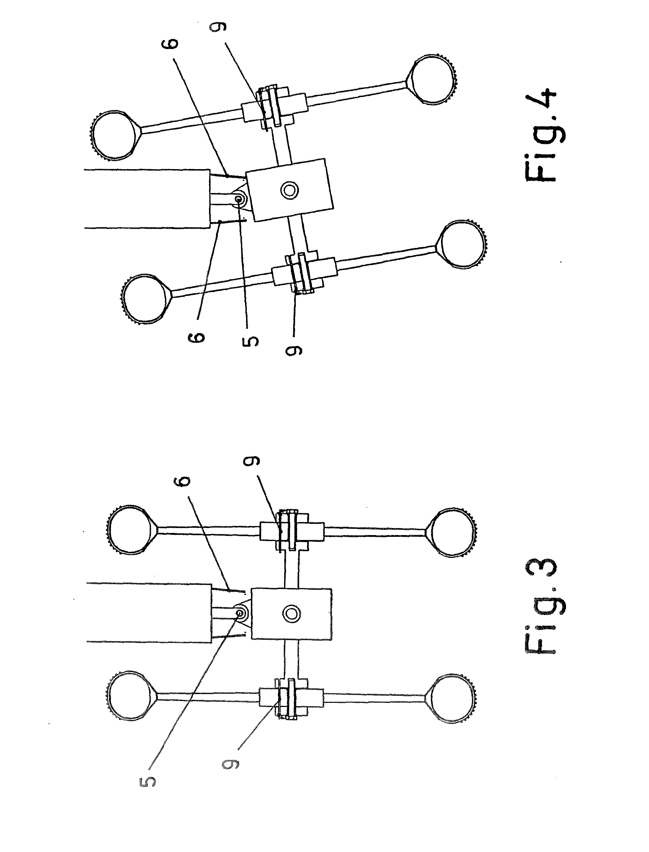

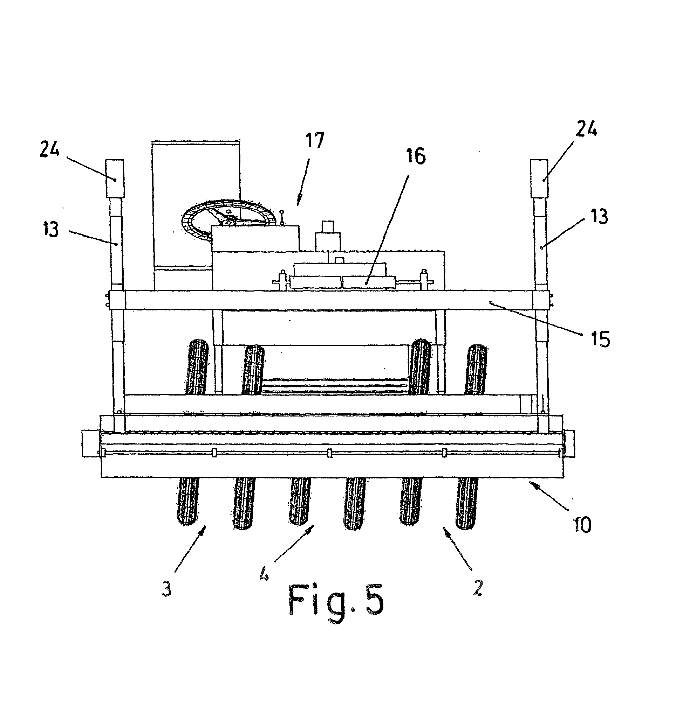

Said swiveling assembly of the roller assemblies (2, 3, 4) is formed in each of the cases by means of a respective hinge (5), which allows the corresponding wheel assembly to be placed vertically, as shown in Figure 3, or to be positioned inclined, according to Figures 4 and 5, having side stops (6) limiting the rotation on the hinge (5) and restricting the inclination at a maximum angle towards each side.

The three roller assemblies (2, 3, 4) are connected to a hydraulic system, having corresponding hydraulic motors incorporated therein, whereby each of said roller assemblies (2, 3, 4) can be individually actuated. In the proposed machine, the structural frame (1) acts as a container for the hydraulic system fluid, thus simplifying the machine assembly.

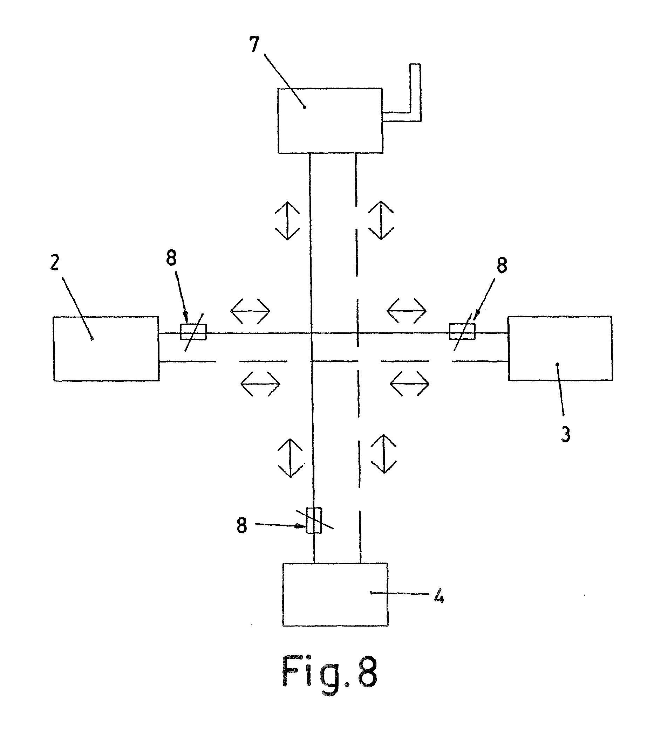

The link of each roller assembly (2, 3, 4) with the corresponding distributor (7) of the hydraulic drive system includes a switch (8) for opening and closing the corresponding hydraulic conduit, as shown in Figure 8, such that the manual actuation can be selectively set with complete actuation traction in the three roller groups (2, 3, 4), or the hydraulic supply and therefore the drive actuation of any of the groups can be interrupted, which allows operating the machine at a lower speed but with greater force, because when the hydraulic supply is cut off from a roller assembly, the pressure is distributed over the actuation of the other two roller assemblies.

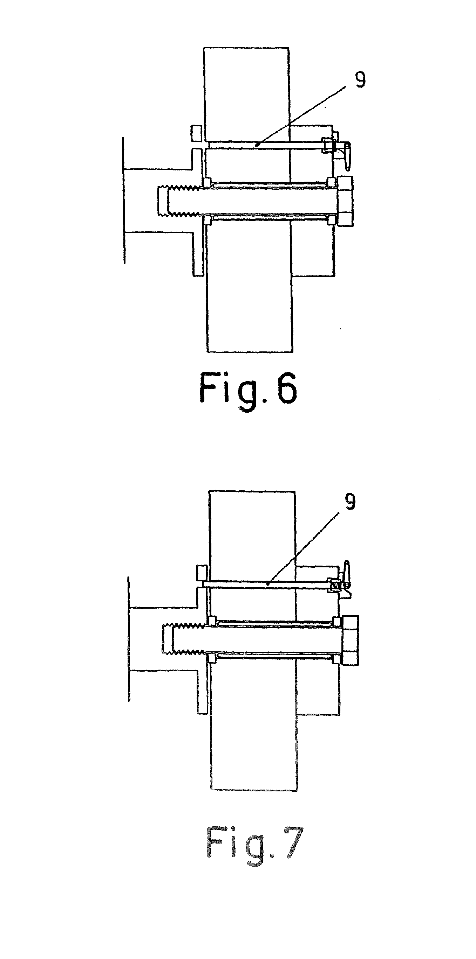

A clutch lock (9) is incorporated in the assembly of each roller assembly (2, 3, 4) with respect to the corresponding actuation transmission, by means of which clutch lock each assembly can be selectively arranged coupled to the actuation transmission, as shown in Figure 7, or uncoupled from the transmission, as shown in Figure 6, to adapt the machine with the suitable traction in each case.

A leveling head (10) is incorporated at the front part of the machine, which head includes at least one worm screw (11) and a straight edge (12), whereby it allows carrying out a uniformly leveled distribution of the flooring materials on the application surfaces.

Said head (10) is supported on the structural frame
(1) by means of vertical cylinders (13), which allow changing the height and inclination of the mentioned head (10) so as to place it at the height and in the position corresponding to the leveling which is to be carried out in each case.

To that end, laser detectors (not shown) are arranged at the lower part of the head (10), which detectors measure the proximity with respect to the work surface, receivers (24) being located in the supporting and height-adjustment cylinders (13) of the head (10), which receivers actuate the operation of the mentioned cylinders (13) depending on the signals of the laser detectors, to place the head (10) in the corresponding position for the leveling of the flooring materials on the application surface.

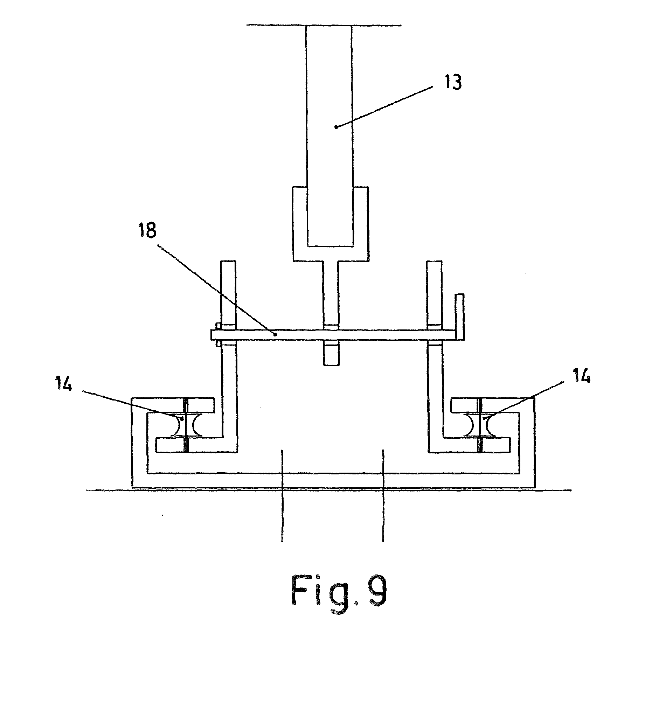

The joining of the cylinders (13) with respect to the head (10) is formed by means of anti-vibration shock absorbers (14), as shown in Figure 9, such that said shock absorbers (14) prevent the machine vibrations from being transmitted to the laser detectors, thus assuring that the measurement provided by said detectors is exact and that the leveling carried out by the machine is perfect according to the expected leveling.

The head (10) is incorporated on the structural frame (1) by means of a support (15), in which the vertical cylinders (13) are held, said support (15) comprising a mobile assembly which can move towards the sides by means of an actuating cylinder (16), such that the head (10) can be moved sideways in the assembly on the front of the machine, facilitating the operation of the machine on all the places of the work surfaces.

The entire functional assembly of the machine is controlled by a control equipment which can be commanded from a control post (17) located on the machine itself, distant control also being possible by means of a communication control by radiofrequency or through wires.

In these conditions, the machine can be placed by means of a crane in any place in which its intervention is required, such as construction platforms and decks in construction, for example, so as to allow the leveling of the flooring materials, the machine moving on the deposited materials themselves.

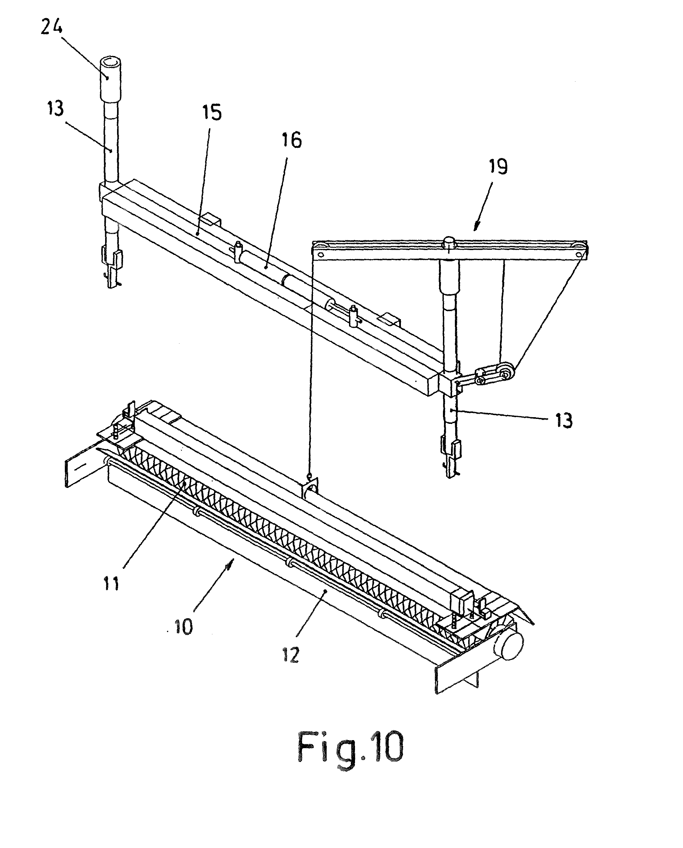

The joining of the vertical cylinders (13) with the shock absorbers (14) is formed, as shown in Figure 9, by means of fastening with transverse pins (18) which are easy to incorporate and remove, which allows easily and quickly disassembling the head (10) for transport, being able to be removed by means of any type of crane, such as for example a hoist (19) coupled to the machine itself, as shown in Figure 10.

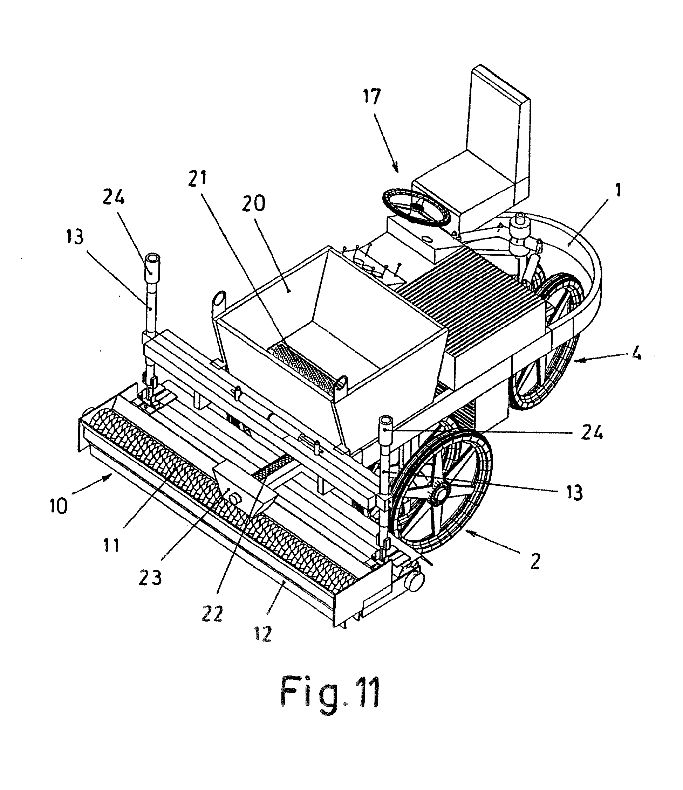

Equipment for supplying the flooring material to be scattered on the application surfaces can be incorporated in the structural assembly of the machine, said equipment comprising a hopper (20) which is arranged on the structural frame (1) and internally incorporates a worm screw (21) to unload the material from the inside of said hopper (20) to a worm screw conveyor (22) conveying the material to an unloader (23) on the head (10), as shown in Figure 11.

## Claims

1. - A machine for spreading materials on the floor, of the type comprising a structural assembly arranged on three independent roller assemblies, at least one of which can be oriented to steer the machine, incorporating at the front part of the structural assembly a leveling head provided with an element for distributing and leveling the application materials, **characterized in that** the roller assemblies (2, 3, 4) on which the machine is supported are coupled to a hydraulic drive actuation system, with the possibility of individually and selectively cutting off the hydraulic fluid to each of said roller assemblies to adapt the drive actuation force and speed conditions of the machine, whereas the leveling head (10) is arranged in the assembly by means of a support (15) which allows the movement of said head (10) towards the sides with respect to its position at the front of the machine.

2. - A machine for spreading materials on the floor according to claim one, **characterized in that** the head (10) is supported with respect to the support (15) by means of vertical height-adjustment cylinders (13), which are joined to the mentioned head (10) by means of shock absorbers (14) preventing the machine vibrations from being transmitted to the elements of the mentioned head (10).

3. - A machine for spreading materials on the floor according to claims one and two, **characterized in that** the joining of the vertical cylinders (13) with respect to the shock absorbers (14) is formed by means of transverse pins (18) which can be removed to disassemble the head from the assembly on the machine.

4. - A machine for spreading materials on the floor according to claim one, **characterized in that** the roller assemblies (2, 3, 4) individually incorporate a clutch lock (9) linked to the drive actuation system, allowing to selectively couple and uncouple any of said groups (2, 3, 4) with respect to the drive transmission.

5. - A machine for spreading materials on the floor according to claim one, **characterized in that** the structural assembly supported on the roller assemblies (2, 3, 4) comprises a frame (1) acting as a tank for the hydraulic fluid of the actuation system of the functional assembly of the machine.

6. - A machine for spreading materials on the floor according to claim one, **characterized in that** equipment for scattering the application materials can be incorporated in the structural assembly, which equipment comprises a hopper (20) for housing the materials, with a worm screw conveyor (22) for conveying the materials from said hopper (20) to an unloader (23) on the head (10).
